(19) Europäisches Patentamt
European Patent Office
Office européen des brevets

(11) **EP 4 679 158 A1**

(12) **EUROPEAN PATENT APPLICATION**
published in accordance with Art. 153(4) EPC

(43) Date of publication:
**14.01.2026 Bulletin 2026/03**

(21) Application number: **24766889.0**

(22) Date of filing: **21.02.2024**

(51) International Patent Classification (IPC):
**G02B 13/04** (2006.01)   **G01S 7/481** (2006.01)
**G02B 13/18** (2006.01)

(52) Cooperative Patent Classification (CPC):
**G01S 7/481; G02B 13/04; G02B 13/18**

(86) International application number:
**PCT/JP2024/006336**

(87) International publication number:
**WO 2024/185518 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.03.2023 JP 2023036638**

(71) Applicant: **Koito Manufacturing Co., Ltd.
Tokyo 141-0001 (JP)**

(72) Inventors:
• **MOTOHASHI, Kazuya**
  **Shizuoka-shi, Shizuoka 424-8764 (JP)**
• **MURAKAMI, Kazuomi**
  **Shizuoka-shi, Shizuoka 424-8764 (JP)**

(74) Representative: **Maiwald GmbH
Engineering
Elisenhof
Elisenstrasse 3
80335 München (DE)**

(54) **OPTICAL SYSTEM AND MEASUREMENT DEVICE**

(57) An optical system according to the present disclosure includes: a front group disposed on an object side and having negative power as a whole; and a rear group disposed further toward a sensor side than a stop position and having positive power as a whole, wherein the optical system has negative distortion aberration as a whole. The front group includes: a front-group first lens disposed on the object side and being constituted by a resin lens having negative power; and a front-group second lens disposed closest to the stop position and being constituted by a resin lens, a sensor-side surface thereof having an aspherical surface. The rear group includes: a rear-group first lens disposed closest to the stop position and being constituted by a glass lens having positive power; and a rear-group second lens disposed closest to the sensor and being constituted by a resin lens having positive power. An object-side surface of the front-group second lens is concave, and the sensor-side surface thereof is convex.

FIG. 1

EP 4 679 158 A1

**Description**

TECHNICAL FIELD

The present invention relates to an optical system and a measurement device.

BACKGROUND ART

Patent Literature 1 discloses a retrofocus-type optical system. Patent Literature 2 discloses LIDAR (Light Detection and Ranging; Laser Imaging, Detection and Ranging) including an athermalized optical system.

CITATION LIST

PATENT LITERATURE

Patent Literature 1: WO 2019/073744 A1
Patent Literature 2: JP 2021-124725 A

SUMMARY

TECHNICAL PROBLEM

It is desirable that measurement devices such as LIDAR devices have a wide field of view. In optical systems having a wide field of view, however, the amount of light at the periphery decreases according to the cosine fourth law (i.e., peripheral light falloff occurs). If an optical system that undergoes peripheral light falloff is used in a measurement device, the detectable distance at the periphery of the field of view may be reduced.

Meanwhile, resin lenses are lightweight compared to glass lenses, and therefore, resin lenses may be used in optical systems to achieve weight reduction. However, measurement devices, such as LIDAR devices, are mounted on vehicles and therefore must maintain performance across a wide temperature range. This requires temperature compensation when resin lenses are used in an optical system.

An objective of the present invention is to provide a novel optical system capable of fulfilling both an increase in the amount of light at the periphery in a wide field of view and achievement of temperature compensation while employing resin lenses.

SOLUTION TO PROBLEM

An aspect of the present invention for achieving the aforementioned objective is an optical system for a measurement device configured to make a sensor receive reflected light, the optical system including: a front group disposed on an object side and having negative power as a whole; and a rear group disposed further toward the sensor side than a stop position and having positive power as a whole, wherein the optical system has negative distortion aberration as a whole. The front group includes: a front-group first lens disposed on the object side and being constituted by a resin lens having negative power; and a front-group second lens disposed closest to the stop position and being constituted by a resin lens, a sensor-side surface thereof having an aspherical surface. The rear group includes: a rear-group first lens disposed closest to the stop position and being constituted by a glass lens having positive power; and a rear-group second lens disposed closest to the sensor and being constituted by a resin lens having positive power. An object-side surface of the front-group second lens is concave, and the sensor-side surface thereof is convex.

Other problems and solutions thereto disclosed by the present application will become apparent from the following Description of Embodiments and Drawings.

EFFECTS OF INVENTION

The present invention can provide an optical system capable of fulfilling both an increase in the amount of light at the periphery in a wide field of view and achievement of temperature compensation while employing resin lenses.

BRIEF DESCRIPTION OF DRAWINGS

[FIG. 1] FIG. 1 is a diagram illustrating a basic configuration of optical system 2 according to an embodiment.

[FIG. 2] FIG. 2 is an aberration chart showing distortion aberration of optical system 2.

[FIG. 3] FIG. 3 is a diagram illustrating regions where an on-axis light beam and an off-axis light beam pass through lens L1.

[FIG. 4] FIG. 4 includes tables showing an example of design data for optical system 2 according to an embodiment.

[FIG. 5] FIG. 5A is a graph showing the amount of light in optical system 2 shown in FIG. 4. FIG. 5B is a graph of a comparative example, showing the cosine fourth law.

[FIG. 6] FIGS. 6A to 6C are graphs showing MTFs, at various temperatures, of optical system 2 shown in FIG. 4.

[FIG. 7] FIG. 7 includes tables showing another example of design data for optical system 2 according to an embodiment.

[FIG. 8] FIG. 8 is a diagram illustrating an optical system corresponding to the design data of FIG. 7.

[FIG. 9] FIG. 9 is an aberration chart showing distortion aberration of the optical system shown in FIGS. 7 and 8.

[FIG. 10] FIG. 10 is a graph showing the amount of light in optical system 2 shown in FIG. 7.

[FIG. 11] FIGS. 11A to 11C are graphs showing MTFs, at various temperatures, of optical system 2 shown in FIG. 7.

[FIG. 12] FIG. 12 is a diagram illustrating an overall configuration of measurement device 1.

[FIG. 13] FIG. 13 is a schematic diagram illustrating measurement device 1.

[FIG. 14] FIG. 14 is a diagram illustrating an example wherein measurement device 1 is mounted on a vehicle.

DESCRIPTION OF EMBODIMENTS

Cross-Reference to Related Applications:

The present application claims priority based on Japanese Patent Application No. 2023-036638 filed on March 9, 2023, the contents of which are incorporated herein by reference.

Embodiments of the present invention will be described below with reference to the Drawings. In the following description, identical or similar features may be denoted by the same reference signs, and overlapping descriptions may be omitted.

EMBODIMENTS:

Optical System:

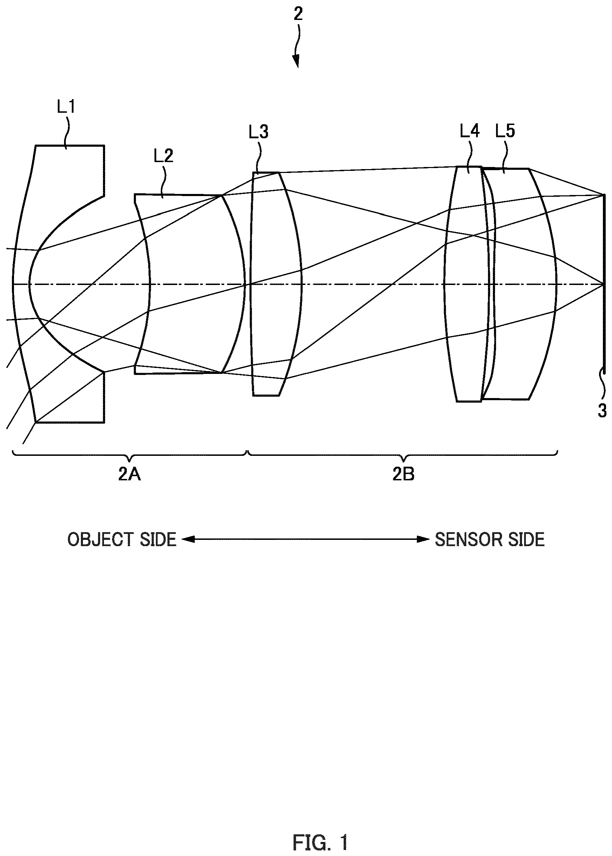

FIG. 1 is a diagram illustrating a basic configuration of an optical system 2 according to the present embodiment.

An optical system 2 of the present embodiment includes a front group 2A and a rear group 2B. The optical system 2 has positive power (positive refractive power) as a whole. A sensor 3 is disposed in an image plane of the optical system 2. The image plane side may be referred to as "sensor side".

The front group 2A is a lens group disposed on the object side of the optical system 2. The front group 2A has negative power (negative refractive power) as a whole. For example, the front group 2A is configured to take in light from a relatively wide angle of view, such as around 120 degrees.

The rear group 2B is a lens group disposed on the sensor side of the optical system 2. The rear group 2B has positive power (positive refractive power) as a whole.

The sensor-side surface of lens L2 illustrated in the figure functions as a stop. The figure shows that the principal ray of an off-axis light beam intersects with the optical axis at the position of the sensor-side surface of the lens L2. Note that, in the figure, the upper line of the on-axis light beam and the upper line of the off-axis light beam intersect with each other at the position of the upper edge of the sensor-side surface of the lens L2, and the lower line of the on-axis light beam and the lower line of the off-axis light beam intersect with each other at the position of the lower edge of the sensor-side surface of the lens L2. The figure thus shows that the sensor-side convex surface of the lens L2 functions as a stop. Note, however, that the stop position is not limited to the sensor-side surface of the lens L2. For example, an aperture stop may be provided between the front group 2A and the rear group 2B.

The optical system 2 of the present embodiment has a so-called retrofocus-type configuration, wherein the front group 2A disposed further toward the object side than the stop position has negative power, and the rear group 2B disposed further toward the sensor side than the stop position has positive power. As described below, the optical system 2 of the present embodiment has negative distortion aberration.

The front group 2A includes lenses L1 and L2. The front group 2A is constituted by the lens L1 and the lens L2 which are lined up in order from the object side. The lens L1 corresponds to the "front-group first lens", and the lens L2 corresponds to the "front-group second lens".

The lens L1 is disposed on the object side of the front group 2A, and is a lens having negative power. The lens L1 is shaped as a meniscus lens, with the object side being convex, and is configured to take in light of a relatively wide angle of view. The lens L1 is constituted by a resin lens.

Since the lens L1 is constituted by a resin lens, it is more susceptible to the influence of temperature compared to a glass lens. Note, however, that the lens L1, as well as lens L5, is configured to compensate for the effects due to temperature change (temperature compensation). This will be described further below.

It is preferable that the lens L1 has an aspherical surface. In this way, the lens L1 can be configured so as to suppress aberration while sharply bending, along the optical axis, light incident at a wide angle. Forming the lens L1 from a resin lens is also advantageous in forming an aspherical surface on the lens L1. Note, however, that the lens L1 does not have to have an aspherical surface.

The lens L2 is the lens disposed closest to the stop position among the lenses of the front group 2A. As described above, in this example, the sensor-side surface of the lens L2 functions as a stop, so the lens L2 is the lens disposed closest to the stop position. The lens L2 is the lens disposed furthest toward the object side among the lenses of the front group 2A. The sensor-side surface of the lens L2 is formed in an aspherical surface. Since the lens L2 is the lens disposed closest to the stop position, the on-axis light beam and the off-axis light beam can be made to coincide with each other on the sensor-side surface of the lens L2, which makes the sensor-side surface (aspherical surface) of the lens L2 suitable for spherical aberration correction. In this example, since the sensor-side surface of the lens L2 functions as a stop, the on-axis light beam and the off-axis light beam coincide with each other on the sensor-side surface of the lens L2, which makes the sensor-side surface of the lens L2 particularly suitable as a surface for spherical aberration correction. Note, however, that even in cases where an aperture stop is provided between the front group 2A and the rear group 2B, the on-axis light beam and the off-axis light beam mainly coincide on the sensor-side surface of the lens L2, and therefore, the sensor-side surface of the lens L2 is suitable as a surface for spherical aberration correction. The lens L2 is constituted by a resin lens. Forming the lens L2 from a resin lens is also advantageous in forming an aspherical surface on the lens L2.

Since the lens L2 is constituted by a resin lens, it is more susceptible to the influence of temperature compared to a glass lens. The lens L2 is, however, shaped as a meniscus lens wherein the object side is concave and the sensor side is convex, thereby suppressing temperature changes in the lens L2 from affecting the optical system 2. Further, shaping the lens L2, which is formed from resin, as a meniscus lens helps to keep the lens L2 from inhibiting the temperature compensation (described below) by the lenses L1 and L5.

The rear group 2B includes lenses L3, L4, and L5. The rear group 2B is constituted by the lens L3, the lens L4, and the lens L5 which are lined up in order from the object side. The lens L3 corresponds to the "rear-group first lens", and the lens L5 corresponds to the "rear-group second lens".

The lens L3 is the lens disposed closest to the stop position among the lenses of the rear group 2B. Stated differently, among the lenses of the rear group 2B, the lens L3 is disposed furthest toward the object side. The lens L3 is a glass lens having positive power. Disposing a glass lens with relatively strong positive power closest to the stop helps to suppress changes in the refractive power of the optical system 2 with respect to temperature changes.

The lenses L4 and L5 are lenses disposed further toward the sensor side than the lens L3. The lenses L4 and L5 have positive power as a whole.

The lens L5 is the lens disposed furthest toward the sensor side among the lenses of the rear group 2B. The lens L5 is a resin lens having positive power. The lens L5 performs temperature compensation together with the lens L1. More specifically, the lens L1-located furthest toward the object side as viewed from the stop-is constituted by a resin lens having negative power, while the lens L5-located furthest toward the sensor side as viewed from the stop-is constituted by a resin lens having positive power, and in this way, temperature compensation is achieved by canceling out the influence due to temperature changes. Stated differently, the lenses L1 and L5, positioned at both ends of the optical system 2, are configured to perform passive temperature compensation.

The sensor-side surface of the lens L5 is shaped as an aspherical surface. Since the lens L5 is the lens disposed furthest toward the sensor side, the on-axis light beam and the off-axis light beam are separated at the position of the lens L5, and therefore, the sensor-side surface of the lens L5 is suitable as a surface for correcting for off-axis aberration by varying the curvature of the convex surface of the lens L5 in accordance with the distance from the optical axis. Note that, not only the sensor-side surface of the lens L5 but also the object-side surface may be shaped as an aspherical surface. Forming the lens L5 from a resin lens is also advantageous in forming an aspherical surface on the lens L5.

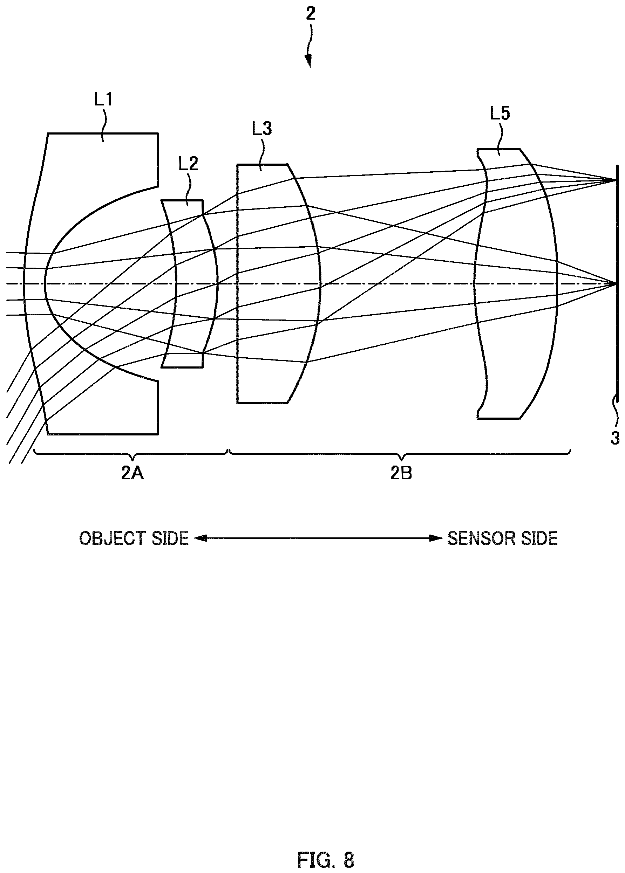

The lens L4 is constituted by a glass lens having positive power. This helps to suppress the influence of temperature changes on the optical system 2 (rear group 2B) while providing the refractive power required for the lenses L4 and L5 as a whole. Note that, in cases where the lens L5 can solely provide the refractive power required for the lens group disposed further toward the sensor side than the lens L3, the lens L4 does not have to be disposed between the lens L3 and the lens L5 (described later; see FIG. 8). Note, however, that under the constraint that the lens L5 needs to achieve temperature compensation together with the lens L1, the provision of the lens L4 facilitates the design of the lens L5. It is therefore preferable to adopt the lens L4 to supplement the refractive power required for the lens group disposed further toward the sensor side than the lens L3.

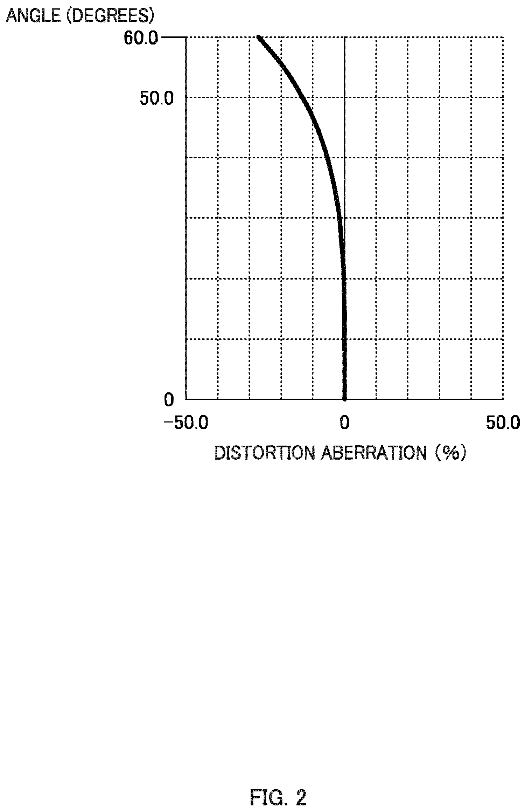

FIG. 2 is an aberration chart showing distortion aberration of the optical system 2. In the aberration chart, the vertical axis indicates the angle of view (unit: degrees; half angle of view), and the horizontal axis indicates distortion aberration D (unit: %; distortion).

Distortion aberration D (unit: %) can be expressed by the following equation, where an ideal image height created by a lens having no distortion aberration is defined as y and an actual image height created by a lens having distortion aberration is defined as y'.

$$D = \{(y'-y)/y\} \times 100$$

Image heights y, y' can be expressed by the following equations, where the focal distance of the lens is defined as f and the angle of light is defined as $\theta$.

$$y = f \times \tan\theta$$

$$y' = \{1+(D/100)\} \times f \times \tan\theta$$

In cases where the optical system 2 has negative distortion aberration D, the magnification $\beta$ of distortion aberration (= $1+(D/100)$) is less than 1 ($\beta < 1$). Therefore, in cases where the optical system 2 has negative distortion aberration D, the peripheral pixels of the sensor 3 (the pixels at a distance from the optical axis) can receive light incident from a wide angle, compared to the central pixels of the sensor 3 (the pixels at or in the vicinity of the optical axis).

As described above, in the present embodiment, the optical system 2 is configured to have negative distortion aberration. Note that, in the present embodiment, since the front group 2A has negative power, the front group 2A changes the direction of light such that it approaches the optical axis as it gets closer to the stop (cf. the principal ray of the off-axis light beam of the front group 2A in FIG. 1). On the other hand, since the rear group 2B has positive power, the rear group 2B changes the direction of light such that it approaches the optical axis as it gets closer to the sensor 3 (cf. the principal ray of the off-axis light beam of the rear group 2B in FIG. 1). That is, the front group 2A and the rear group 2B each function to bring the sensor-reaching position of the off-axis light beam's principal ray closer to the optical axis. This means that the front group 2A and the rear group 2B function to reduce the aforementioned image height y'; i.e., the front group 2A and the rear group 2B function in a manner that the distortion aberration D becomes negative.

Stated differently, the present embodiment adopts the optical system 2 having negative distortion aberration as a whole, in order to suppress peripheral light falloff. Further, the present embodiment adopts the optical system 2 including a front group 2A having negative power as a whole and a rear group 2B having positive power as a whole, in order that the optical system 2 has negative distortion aberration as a whole.

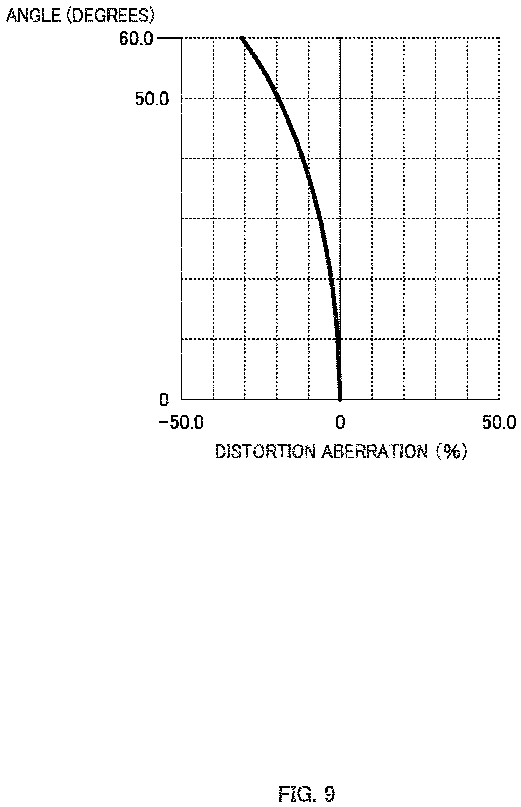

Further, in the present embodiment, as illustrated in FIG. 2 (or FIG. 9 described below), the optical system 2 is configured such that the absolute value of the distortion aberration D becomes greater toward the periphery (i.e., the further outward the light-receiving position of the sensor 3 is; the greater the angle of incident light is). This can suppress an increase in light falloff toward the periphery due to the cosine fourth law.

In the present embodiment, the absolute value of the distortion aberration with respect to light incident at 50 degrees is set to 10% or greater. In the present embodiment, the optical system 2 is designed such that the optical system 2 is intentionally provided with negative distortion aberration in order to suppress peripheral light falloff. Note that, although wide-angle lenses used in typical cameras (image-capturing devices) are designed to suppress distortion aberration, the distortion aberration of the optical system 2 of the present embodiment is relatively greater compared to typical wide-angle lenses used in cameras.

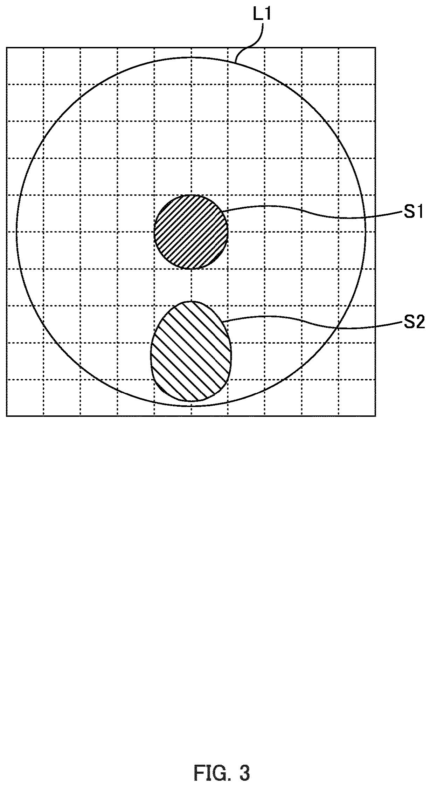

FIG. 3 is a diagram illustrating regions where an on-axis light beam and an off-axis light beam pass through the lens L1.

The large outer circle illustrated by the solid line in the figure indicates the size of the lens L1. The hatched region S1 in the central portion of the figure indicates the region where an on-axis light beam passes through the lens L1. The region S1 where an on-axis light beam passes through is circular. The hatched region S2 on the lower side of the figure indicates the region where an off-axis light beam passes through the lens L1. The region S2 where an off-axis light beam passes through is elliptic.

In the present embodiment, the region S2 where an off-axis light beam passes through the lens L1 is larger than the region S1 where an on-axis light beam passes through the lens L1. In this way, the off-axis light beam can be thickened, which helps to suppress peripheral light falloff.

In the present embodiment, the length of the region S2 in the radial (sagittal) direction is greater than the length (diameter) of the region S1 in the radial direction. Further, the ratio of the length of the region S2 in the radial direction to the diameter of the region S1 is greater than the ratio of the length of the region S2 in the concentric (meridional) direction to the diameter of the region S1. This means that the angle of view of the off-axis light beam is wider than the angle of view of the on-axis light beam. That is, in the present embodiment, the front group 2A is configured such that the angle of view of the off-axis light beam becomes wider than the angle of view of the on-axis light beam, and thus, the optical system 2 (front group 2A) is configured such that the region S2 becomes larger than the region S1.

Further, in the present embodiment, in order to make the region S2 larger than the region S1, the front group 2A is constituted by: the lens L1 which has negative power; and the lens L2 which is concave on the object side and convex on the sensor side, and whose sensor-side surface functions as a stop. Note that, if a planar aperture stop is provided between the front group 2A and the rear group 2B instead of employing the sensor-side surface of the lens L2 as a stop, the off-axis light beam obliquely passing through the stop will become thin, which may cause peripheral light falloff. In contrast, in the present embodiment, while negative power of the front group 2A is provided by the object side (i.e., the object-side surface of the lens L1, the sensor-side surface of the lens L1, and the object-side surface of the lens L2) before the stop position, the sensor-side surface of the lens L2-which functions as a stop-is made convex. In this way, the off-axis light beam passing through the stop can be thickened.

Note that, in the lens L2, the lower line of the off-axis light beam deviates further from the optical axis as it approaches the stop. The inclusion of such light rays, which deviate further from the optical axis as they approach the stop, in the light beam of the front group 2A (the light beam whose principal ray is below the optical axis) also contributes to thickening of the off-axis light beam. Moreover, while negative power of the front group 2A is provided by the object side (i.e., the object-side surface of the lens L1, the sensor-side surface of the lens L1, and the object-side surface of the lens L2) before the stop position, the sensor-side surface of the lens L2-which functions as a stop-is made convex. In this way, the front group 2A can be configured such that the light beam of the front group 2A includes light rays that deviate further from the optical axis as they approach the stop, thereby enabling thickening of the off-axis light beam passing through the stop.

Further, in the present embodiment, shaping the sensor-side surface of the lens L2 as a convex surface can help to reduce the diameter of the lens L3. That is, in the present embodiment, shaping the sensor-side surface of the lens L2 as a convex surface can thicken the light beam passing through the stop and can also suppress an increase in lens diameter.

Working Examples:

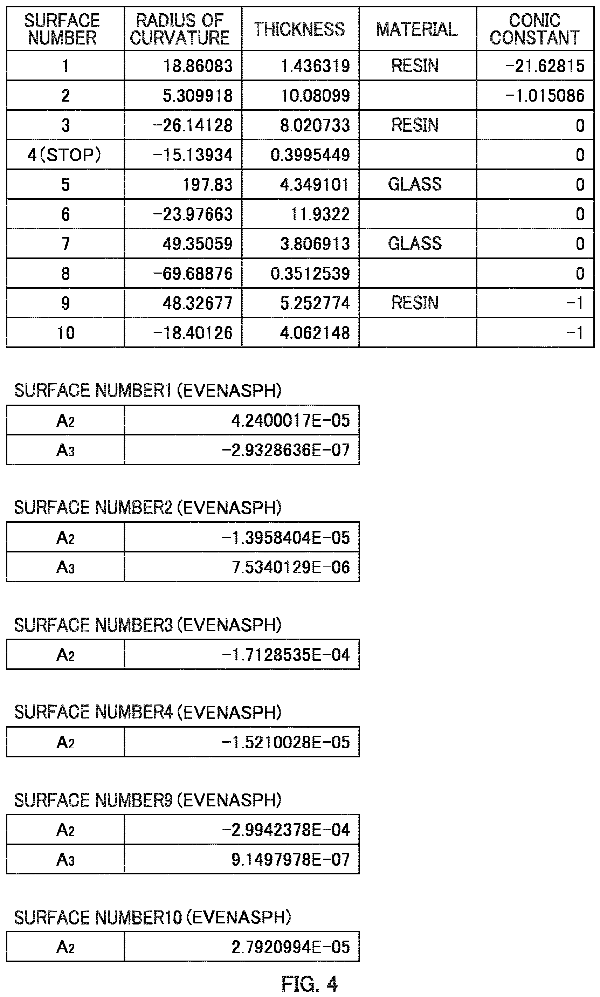

FIG. 4 shows an example of design data for the optical system 2 of the present embodiment. The optical system 2 illustrated in FIG. 1 corresponds to the design data of FIG. 4. (The aberration chart showing distortion aberration in FIG. 2 also corresponds to the design data of FIG. 4.)

Surface numbers 1 to 4 in FIG. 4 respectively correspond to the object-side surface of the lens L1, the sensor-side surface of the lens L1, the object-side surface of the lens L2, and the sensor-side surface of the lens L2. Surface number 4 functions as a stop. Surface numbers 5 to 10 in FIG. 4 respectively correspond to the object-side surface of the lens L3, the sensor-side surface of the lens L3, the object-side surface of the lens L4, the sensor-side surface of the lens L4, the object-side surface of the lens L5, and the sensor-side surface of the lens L5. The units of the radius of curvature and thickness are in millimeters [mm]. The lenses L1, L2, and L5 are resin lenses (made from optical polyester resin OKP-1 from Osaka Gas Chemicals Co., Ltd.), and the lenses L3 and L4 are glass lenses (made from optical glass TAFD40 from HOYA Corporation).

The sag z (unit: mm) indicating the aspherical shapes of surface numbers 1 to 4, 9, and 10 is expressed by the following equation. In the equation, r is the in-plane distance from the optical axis, c is the inverse radius of curvature, k is the conic constant, and $A_n$ is the coefficient of r to the 2n-th power.

[Math. 1]

$$z = \frac{cr^2}{1 + \sqrt{1 - (1+k)c^2r^2}} + A_1r^2 + A_2r^4 + A_3r^6 + \cdots$$

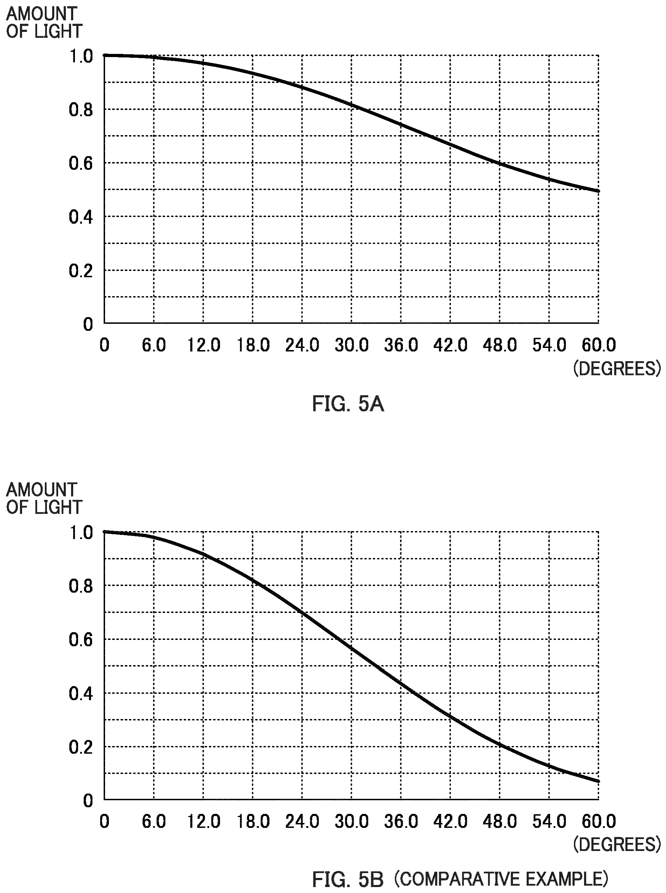

FIG. 5A is a graph showing the amount of light in the optical system 2 shown in FIG. 4. FIG. 5B is a graph of a comparative example, showing the cosine fourth law. The horizontal axis of the graph indicates the half angle of view (unit: degrees), and the vertical axis indicates the amount of light on the image plane (as a ratio relative to the amount of light on the optical axis, which is set to 1). For example, in the comparative example, the amount of light at 60 degrees is 0.0625 (0.5 to the fourth power), whereas in the present embodiment, it is approximately 0.5. As can be understood, the optical system 2 of the present embodiment is capable of suppressing peripheral light falloff, compared to the comparative example. That is, since the optical system 2 has negative distortion aberration (and also, since the off-axis light beam is thicker than the on-axis light beam), peripheral light falloff can be suppressed.

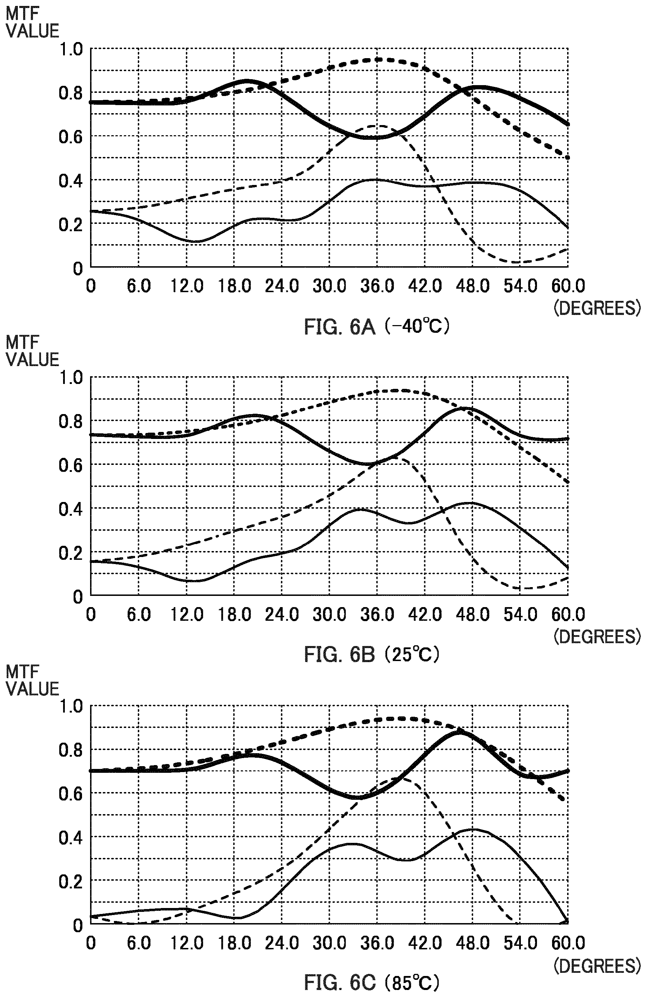

FIGS. 6A to 6C are graphs showing MTFs, at various temperatures, of the optical system 2 shown in FIG. 4. FIG. 6A is a graph showing the MTF at -40°C. FIG. 6B is a graph showing the MTF at 25°C. FIG. 6C is a graph showing the MTF at 85°C. The horizontal axis of the graph indicates the half angle of view (unit: degrees), and the vertical axis indicates the MTF values (contrast values). The curves in thick lines correspond to a spatial frequency of 10 lines/mm, whereas the curves in thin lines correspond to a spatial frequency of 30 lines/mm. The curves in solid lines are curves representing the M direction (meridional direction; concentric direction), whereas the curves in dashed lines represent the S direction (sagittal direction; radial direction). The thick-line curves (curves corresponding to a spatial frequency of 10 lines/mm) show that the MTF values are kept at 0.5 or higher at all temperatures. This shows that the optical system 2 of the present embodiment can maintain its performance across a wide temperature range from temperatures as low as -40°C to temperatures as high as 85°C, even when resin lenses are used. Further, in the optical system 2 of the present embodiment, while temperature compensation is achieved by the lenses L1 and L5, shaping the lens L2 as a meniscus lens can help to prevent it from inhibiting the temperature compensation.

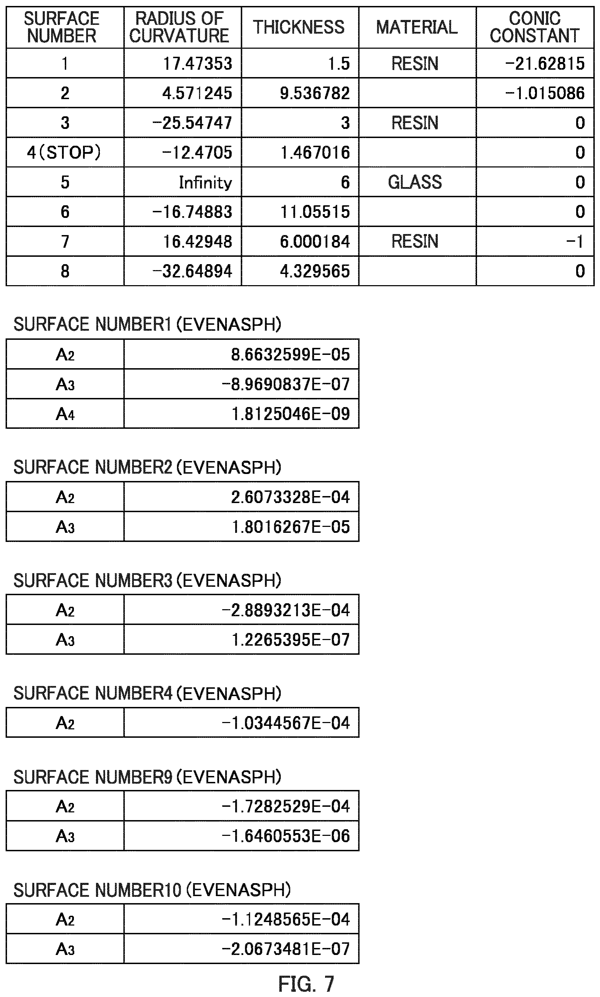

FIG. 7 shows another example of design data for an optical system 2 according to an embodiment. FIG. 8 is a diagram illustrating an optical system corresponding to the design data of FIG. 7. FIG. 9 is an aberration chart showing distortion aberration of the optical system according to FIGS. 7 and 8.

As in the optical system 2 illustrated in FIGS. 1 and 4, the optical system 2 illustrated in FIGS. 7 and 8 includes a front group 2A (lenses L1 and L2) having negative power as a whole and a rear group 2B (lenses L3 and L5) having positive power as a whole, and the optical system has negative distortion aberration as a whole. Note that, different from the optical system 2 illustrated in FIGS. 1 and 4, the optical system 2 illustrated in FIGS. 7 and 8 does not include lens L4 between the lens L3 and the lens L5.

Surface numbers 1 to 4 in FIG. 7 respectively correspond to the object-side surface of the lens L1, the sensor-side surface of the lens L1, the object-side surface of the lens L2, and the sensor-side surface of the lens L2. Surface number 4 functions as a stop. Surface numbers 5 to 8 in FIG. 7 respectively correspond to the object-side surface of the lens L3, the sensor-side surface of the lens L3, the object-side surface of the lens L5, and the sensor-side surface of the lens L5. The units of the radius of curvature and thickness are in millimeters [mm]. The lenses L1, L2, and L5 are resin lenses (made from optical polyester resin OKP-1 from Osaka Gas Chemicals Co., Ltd.), and the lens L3 is a glass lens (made from optical glass TAFD40 from HOYA Corporation).

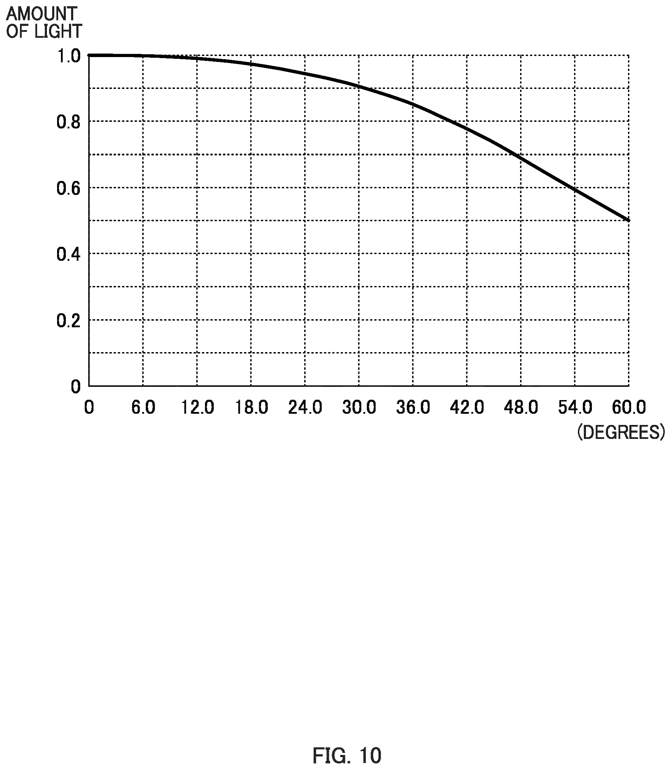

FIG. 10 is a graph showing the amount of light in the optical system 2 shown in FIG. 7. Also in the optical system 2 shown in FIG. 7, for example, the amount of light at 60 degrees is approximately 0.5. As can be understood, the optical system 2 shown in FIG. 7 is also capable of suppressing peripheral light falloff, compared to the comparative example (see FIG. 5B). That is, since the optical system 2 has negative distortion aberration (and also, since the off-axis light beam is thicker than the on-axis light beam), peripheral light falloff can be suppressed, even in cases where lens L4 is not disposed between the lens L3 and the lens L5.

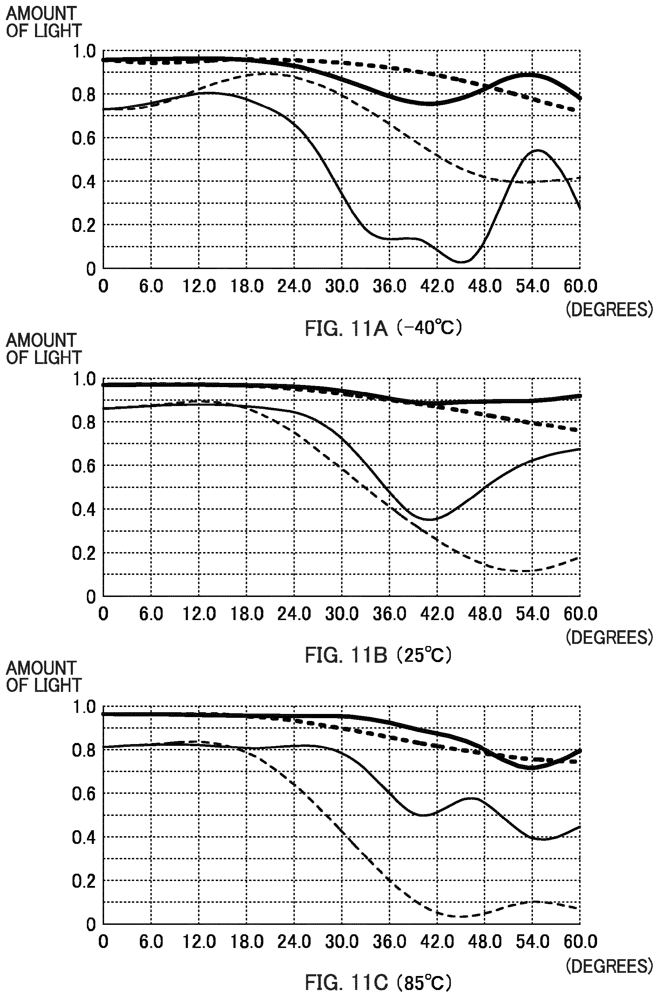

FIGS. 11A to 11C are graphs showing MTFs, at various temperatures, of the optical system 2 shown in FIG. 7. FIG. 11A is a graph showing the MTF at -40°C. FIG. 11B is a graph showing the MTF at 25°C. FIG. 11C is a graph showing the MTF at 85°C. The thick-line curves (curves corresponding to a spatial frequency of 10 lines/mm) show that the MTF values are kept at 0.5 or higher at all temperatures. This shows that, also in the optical system 2 shown in FIG. 7, performance can be maintained across a wide temperature range from temperatures as low as - 40°C to temperatures as high as 85°C, even when resin lenses are used. Further, also in the optical system 2 shown in FIG. 7, while temperature compensation is achieved by the lenses L1 and L5, shaping the lens L2 as a meniscus lens can help to prevent it from inhibiting the temperature compensation.

It should be noted that the design data shown in FIGS. 4 and 7 describe examples of the optical system 2 of the present embodiment. The optical system 2 of the present embodiment is not limited to the optical systems configured according to the design data shown in FIGS. 4 and 7.

Measurement Device:

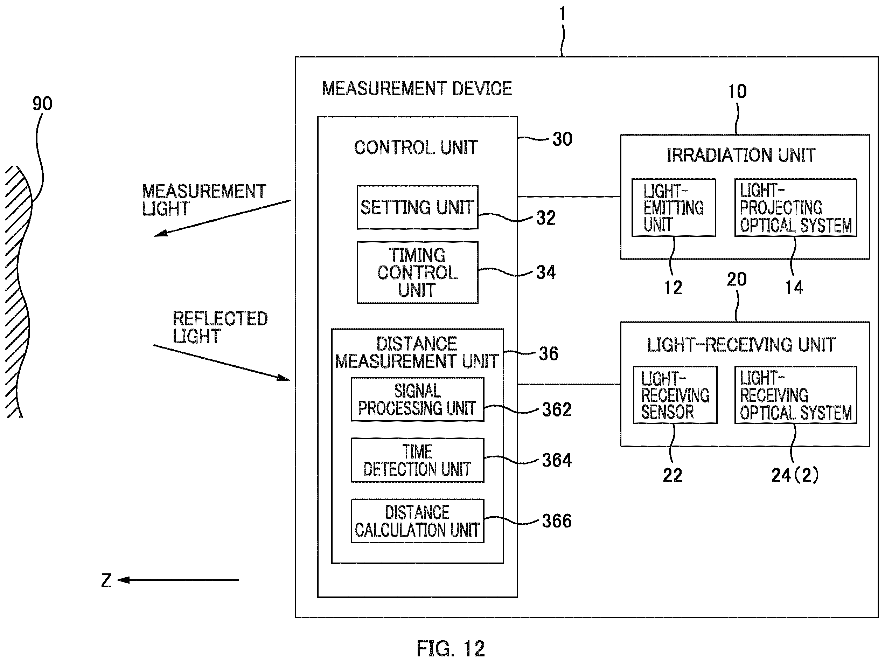

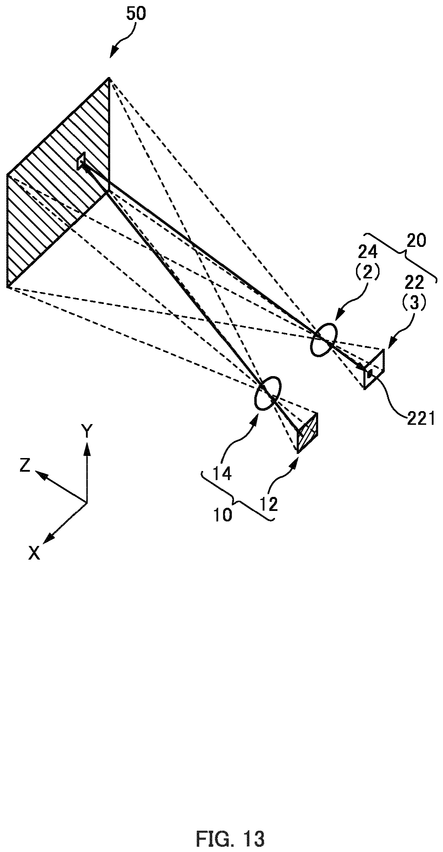

FIG. 12 is a diagram illustrating an overall configuration of a measurement device 1. FIG. 13 is a schematic diagram illustrating the measurement device 1.

The measurement device is a device for measuring the distance to an object 90. The measurement device 1 has functions as a so-called LiDAR (Light Detection and Ranging; Laser Imaging, Detection and Ranging) device. The measurement device 1 emits measurement light and detects the light reflected from the surface of an object 90, to measure the distance to the object 90. For example, the measurement device 1 measures the distance to the object 90 by time-of-flight (TOF) technology, wherein the time from the emission of measurement light to the reception of reflected light is measured. The measurement device 1 includes an irradiation unit 10, a light-receiving unit 20, and a control unit 30.

The irradiation unit 10 is an irradiation device configured to emit measurement light toward an object 90. The irradiation unit 10 emits the measurement light toward a measurement area 50 (see FIG. 13) at a predetermined angle of view. The irradiation unit 10 includes a light-emitting unit 12 and a light-projecting optical system 14. The light-emitting unit 12 is a member (light source) configured to emit light. The light-projecting optical system 14 is an optical system configured to irradiate the measurement area 50 with the light emitted from the light-emitting unit 12. The irradiation unit 10 may be configured to irradiate the entire measurement area 50 with light at once. Alternatively, the irradiation unit 10 may be configured to scan the irradiated light over the measurement area 50.

The light-receiving unit 20 receives light reflected from an object 90. The light-receiving unit 20 receives light reflected from the measurement area 50 (see FIG. 13). The light-receiving unit 20 includes a light-receiving sensor 22 and a light-receiving optical system 24. The light-receiving sensor 22 includes a plurality of pixels 221 arranged two-dimensionally. For example, in cases of a VGA light-receiving sensor 22, 480×640 of pixels 221 are arranged two-dimensionally. Each pixel 221 outputs a signal (light reception data) corresponding to the amount of light received. The light-receiving optical system 24 is an optical system allowing the light-receiving unit 20 to receive reflected light from the measurement area 50. In this example, the light-receiving optical system 24 is constituted by the optical system 2 illustrated in FIG. 1 (or FIG. 8). The light-receiving sensor 22 corresponds to the sensor 3 illustrated in FIG. 1 (or FIG. 8) and is disposed in the image plane of the light-receiving optical system 24. The pixels 221 of the light-receiving sensor 22 are respectively associated, via the light-receiving optical system 24, with predetermined regions in the measurement area 50. A certain pixel 221 of the light-receiving sensor 22 will receive light (reflected light) from a corresponding region in the measurement area 50 via the light-receiving optical system 24.

The control unit 30 controls the measurement device 1. The control unit 30 controls the irradiation unit 10 to control light emitted from the irradiation unit 10. Further, the control unit 30 measures the distance to the object 90 based on the output results of the light-receiving unit 20. The control unit 30 includes a computing device and a storage device which are not illustrated. The computing device is a processing device constituted, for example, by a CPU, a GPU, etc. A part of the computing device may be constituted by an analog operating circuit. The storage device is a device that stores programs and data and is constituted by a main storage device and an auxiliary storage device. The computing device executes the programs stored in the storage device to thereby execute various processes for measuring the distance to an object 90. FIG. 12 illustrates functional blocks describing various processes.

The control unit 30 includes a setting unit 32, a timing control unit 34, and a distance measurement unit 36. The setting unit 32 performs various settings. The timing control unit 34 controls processing timings of the respective units. For example, the timing control unit 34 controls the timing for emitting light from the light-emitting unit 12. The distance measurement unit 36 measures the distance to an object 90. The distance measurement unit 36 includes a signal processing unit 362, a time detection unit 364, and a distance calculation unit 366. The signal processing unit 362 processes an output signal (light reception data) of the light-receiving sensor 22. The time detection unit 364 detects the time of flight of light (the time from the emission of light to the arrival of reflected light). The distance calculation unit 366 calculates the distance to an object 90.

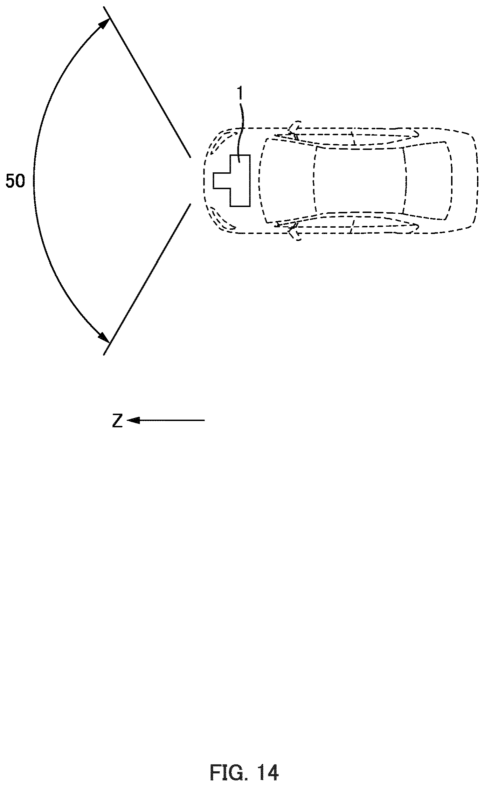

FIG. 14 is a diagram illustrating an example wherein the measurement device 1 is mounted on a vehicle. As illustrated in the figure, in cases of mounting the measurement device 1 onto a vehicle, it is preferable to measure the distance in a wide field of view. Further, in cases of mounting the measurement device 1 onto a vehicle, it is preferable that the device is lightweight and can maintain performance across a wide temperature range. To address this, in the present embodiment, the light-receiving optical system 24 of the measurement device 1 is constituted by the aforementioned optical system 2 illustrated in FIG. 1 (or FIG. 8). This helps to suppress reduction in the amount of light received by the peripheral pixels of the light-receiving sensor 22, which thus helps to suppress reduction in the detectable distance at the periphery of the field of view (i.e., in regions corresponding to the peripheral pixels of the light-receiving sensor 22). It is also possible to maintain performance across a wide temperature range while achieving weight reduction by employing resin lenses. As described above, the optical system 2 of the present embodiment is particularly effective when used as the light-receiving optical system 24 of the measurement device 1.

Brief Summary:

As described above, the optical system 2 of the present embodiment includes a front group 2A having negative power, and a rear group 2B having positive power, and the optical system has negative distortion aberration as a whole. Accordingly, the optical system 2 of the present embodiment can have a wide field of view while increasing the amount of light at the periphery (i.e., helps to suppress peripheral light falloff while having a wide angle). Further, the front group 2A includes a lens L1 (corresponding to "front-group first lens") constituted by a resin lens and a lens L2 (corresponding to "front-group second lens") constituted by a resin lens, and the rear group 2B includes a lens L3 (corresponding to "rear-group first lens") constituted by a glass lens and a lens L5 (corresponding to "rear-group second lens") constituted by a resin lens. By employing resin and glass lenses in combination, weight reduction can be achieved, compared to cases where all the lenses are constituted by glass lenses. Compared to glass lenses, resin lenses are susceptible to changes in properties due to temperature changes. In the present embodiment, however, by disposing the lens L1 having negative power and the lens L5 having positive power at both ends of the optical system 2, passive temperature compensation can be achieved. It should be noted that, since the lens L3 (corresponding to the "rear-group first lens") having positive power and disposed closest to the stop is constituted by a glass lens, it is possible to suppress changes in the properties of the optical system 2 with respect to temperature changes. Further, although the lens L2 (corresponding to the "front-group second lens") is constituted by a resin lens to provide it with an aspherical surface, the lens L2 is configured such that its object-side surface is concave and its sensor-side surface is convex. In this way, temperature change in the lens L2 is kept from affecting the optical system 2, and the lens L2 is kept from inhibiting the temperature compensation achieved by the lenses L1 and L5. Accordingly, the optical system 2 of the present embodiment is capable of fulfilling both an increase in the amount of light at the periphery in a wide field of view and achievement of temperature compensation while employing resin lenses.

Further, as shown in FIGS. 2 and 9, it is preferable that the optical system 2 is configured such that the absolute value of the distortion aberration becomes greater toward the periphery. This helps to suppress reduction in the amount of light at the periphery according to the cosine fourth law as shown in FIG. 5B (see FIGS. 5A and 10). It should be noted that, in the examples shown in FIGS. 2 and 9, the absolute value of the distortion aberration with respect to light incident at 50 degrees is set to 10% or greater, but the distortion aberration is not limited to the examples shown in FIGS. 2 and 9.

Further, as illustrated in FIG. 3, it is preferable that the region S2 where an off-axis light beam passes through the lens L1 is larger than the region S1 where an on-axis light beam passes through the lens L1. In this way, the off-axis light beam can be thickened, which helps to suppress peripheral light falloff. Note that, as long as the optical system 2 has negative distortion aberration, the peripheral light amount can be suppressed from being reduced according to the cosine fourth law, even if the optical system 2 is not configured such that the region S2 becomes larger than the region S1. However, a configuration wherein the optical system 2 has negative distortion aberration and wherein the optical system 2 is further configured such that the region S2 becomes larger than the region S1 is particularly advantageous, because peripheral light falloff can be suppressed synergistically.

Further, it is preferable that the lens L1 (corresponding to the "front-group first lens") has an aspherical surface. Note, however, that the lens L1 does not have to have an aspherical surface.

Further, it is preferable that the sensor-side surface of the lens L2 (corresponding to the "front-group second lens") functions as a stop. Accordingly, it is unnecessary to provide a stop mechanism between the front group 2A and the rear group 2B. In addition, since the sensor-side surface of the lens L2, which functions as a stop, is convex, it is also possible to achieve the effect of reducing the diameter of the lens L3.

In cases where the sensor-side surface of the lens L2 (corresponding to the "front-group second lens") functions as a stop, it is preferable that the sensor-side surface of the lens L2 is configured in an aspherical shape to correct for spherical aberration. When the sensor-side surface of the lens L2 (corresponding to the "front-group second lens") functions as a stop, the on-axis light beam and the off-axis light beam coincide with each other on the sensor-side surface of the lens L2, which makes the sensor-side surface of the lens L2 particularly suitable as a surface for spherical aberration correction. Note, however, that the sensor-side surface of the lens L2 does not have to be configured in an aspherical shape to correct for spherical aberration.

Further, it is preferable that the lens L4, constituted by a glass lens, is disposed between the lens L3 (corresponding to the "rear-group first lens") and the lens L5 (corresponding to the "rear-group second lens"). This helps to suppress the influence of temperature changes on the optical system 2 while providing the refractive power required for the lens group disposed further toward the sensor side than the lens L3. Note, however, that the optical system 2 does not have to include the lens L4.

Further, it is preferable that the lens L5 (corresponding to the "rear-group second lens") has an aspherical surface to correct for off-axis aberration. Since the lens L5 is the lens disposed furthest toward the sensor side, the on-axis light beam and the off-axis light beam are separated at the position of the lens L5, and therefore, the lens L5 is suitable for off-axis aberration correction. Note, however, that the lens L5 does not have to have an aspherical shape to correct for off-axis aberration.

As described above, the measurement device 1 of the present embodiment includes the aforementioned optical system 2 as its light-receiving optical system 24. This helps to suppress reduction in the amount of light received by the peripheral pixels of the light-receiving sensor 22 (sensor 3), which thus helps to suppress reduction in the detectable distance at the periphery of the field of view (i.e., in regions corresponding to the peripheral pixels of the light-receiving sensor 22). It is also possible to maintain performance across a wide temperature range while achieving weight reduction by employing resin lenses. The measurement device 1 of the present embodiment is particularly effective as an on-vehicle device. Note, however, that the measurement device 1 does not have to be mounted on a vehicle.

Embodiments of the present invention have been described in detail above, but the present invention is not limited to the foregoing embodiments and may encompass various modified examples. The foregoing embodiments illustrate, in detail, various features to facilitate the understanding of the present invention, but the present invention is not necessarily limited to embodiments including all of the features described above. Some features of the foregoing embodiments may be omitted, or replaced or supplemented by other features.

REFERENCE SIGNS LIST

L1: Lens (front-group first lens);
L2: Lens (front-group second lens);
L3: Lens (rear-group first lens);
L4: Lens;
L5: Lens (rear-group second lens);
1: Measurement device;
2: Optical system;
2A: Front group;
2B: Rear group;
3: Sensor;
10: Irradiation unit;
12: Light-emitting unit;
14: Light-projecting optical system;
20: Light-receiving unit;
22: Light-receiving sensor (sensor);
24: Light-receiving optical system (optical system);
50: Measurement area;
90: Object.

**Claims**

1. An optical system for a measurement device configured to make a sensor receive reflected light, the optical system comprising:

   a front group disposed on an object side and having negative power as a whole; and
   a rear group disposed further toward the sensor side than a stop position and having positive power as a whole, wherein
   the optical system has negative distortion aberration as a whole;
   the front group comprises

   a front-group first lens disposed on the object side and being constituted by a resin lens having negative power, and
   a front-group second lens disposed closest to the stop position and being constituted by a resin lens, a sensor-side surface thereof having an aspherical surface;

   the rear group comprises

   a rear-group first lens disposed closest to the stop position and being constituted by a glass lens having positive power, and
   a rear-group second lens disposed closest to the sensor and being constituted by a resin lens having positive power; and

   an object-side surface of the front-group second lens is concave, and the sensor-side surface thereof is convex.

2. The optical system according to claim 1, wherein
   an absolute value of the distortion aberration is set to be greater toward a periphery of the optical system.

3. The optical system according to claim 2, wherein
   the absolute value of the distortion aberration with respect to light incident at 50 degrees is 10% or greater.

4. The optical system according to any one of claims 1 to 3, wherein
   a region where an off-axis light beam passes through the front-group first lens is larger than a region where an on-axis light beam passes through the front-group first lens.

**5.** The optical system according to any one of claims 1 to 3, wherein
the front-group first lens has an aspherical surface.

**6.** The optical system according to any one of claims 1 to 3, wherein
the sensor-side surface of the front-group second lens functions as a stop.

**7.** The optical system according to claim 6, wherein
the sensor-side surface of the front-group second lens is configured in an aspherical shape to correct for spherical aberration.

**8.** The optical system according to any one of claims 1 to 3, wherein
a glass lens is disposed between the rear-group first lens and the rear-group second lens.

**9.** The optical system according to any one of claims 1 to 3, wherein
the rear-group second lens has an aspherical surface.

**10.** The optical system according to claim 9, wherein
the rear-group second lens has an aspherical surface to correct for off-axis aberration.

**11.** A measurement device comprising:

an irradiation unit configured to emit light; and
a light-receiving unit configured to receive reflected light reflected by an object, the light having been emitted from the irradiation unit, wherein
the light-receiving unit comprises

a sensor including a plurality of pixels configured to detect the reflected light, and
a light-receiving optical system configured to make the sensor receive the reflected light;

the light-receiving optical system comprises

a front group disposed on the object side and having negative power as a whole, and
a rear group disposed further toward the sensor side than a stop position and having positive power as a whole;
the light-receiving optical system has negative distortion aberration as a whole;
the front group comprises

a front-group first lens disposed on the object side and being constituted by a resin lens having negative power, and
a front-group second lens disposed closest to the stop position and being constituted by a resin lens, a sensor-side surface thereof having an aspherical surface;

the rear group comprises

a rear-group first lens disposed closest to the stop position and being constituted by a glass lens having positive power, and
a rear-group second lens disposed closest to the sensor and being constituted by a resin lens having positive power; and

an object-side surface of the front-group second lens is concave, and the sensor-side surface thereof is convex.

FIG. 1

ANGLE (DEGREES)

DISTORTION ABERRATION (%)

FIG. 2

FIG. 3

| SURFACE NUMBER | RADIUS OF CURVATURE | THICKNESS | MATERIAL | CONIC CONSTANT |
|---|---|---|---|---|
| 1 | 18.86083 | 1.436319 | RESIN | -21.62815 |
| 2 | 5.309918 | 10.08099 | | -1.015086 |
| 3 | -26.14128 | 8.020733 | RESIN | 0 |
| 4(STOP) | -15.13934 | 0.3995449 | | 0 |
| 5 | 197.83 | 4.349101 | GLASS | 0 |
| 6 | -23.97663 | 11.9322 | | 0 |
| 7 | 49.35059 | 3.806913 | GLASS | 0 |
| 8 | -69.68876 | 0.3512539 | | 0 |
| 9 | 48.32677 | 5.252774 | RESIN | -1 |
| 10 | -18.40126 | 4.062148 | | -1 |

SURFACE NUMBER1 (EVENASPH)

| $A_2$ | 4.2400017E-05 |
|---|---|
| $A_3$ | -2.9328636E-07 |

SURFACE NUMBER2 (EVENASPH)

| $A_2$ | -1.3958404E-05 |
|---|---|
| $A_3$ | 7.5340129E-06 |

SURFACE NUMBER3 (EVENASPH)

| $A_2$ | -1.7128535E-04 |
|---|---|

SURFACE NUMBER4 (EVENASPH)

| $A_2$ | -1.5210028E-05 |
|---|---|

SURFACE NUMBER9 (EVENASPH)

| $A_2$ | -2.9942378E-04 |
|---|---|
| $A_3$ | 9.1497978E-07 |

SURFACE NUMBER10 (EVENASPH)

| $A_2$ | 2.7920994E-05 |
|---|---|

FIG. 4

AMOUNT
OF LIGHT

FIG. 5A

AMOUNT
OF LIGHT

FIG. 5B (COMPARATIVE EXAMPLE)

FIG. 6A (−40℃)

FIG. 6B (25℃)

FIG. 6C (85℃)

| SURFACE NUMBER | RADIUS OF CURVATURE | THICKNESS | MATERIAL | CONIC CONSTANT |
|---|---|---|---|---|
| 1 | 17.47353 | 1.5 | RESIN | -21.62815 |
| 2 | 4.571245 | 9.536782 | | -1.015086 |
| 3 | -25.54747 | 3 | RESIN | 0 |
| 4 (STOP) | -12.4705 | 1.467016 | | 0 |
| 5 | Infinity | 6 | GLASS | 0 |
| 6 | -16.74883 | 11.05515 | | 0 |
| 7 | 16.42948 | 6.000184 | RESIN | -1 |
| 8 | -32.64894 | 4.329565 | | 0 |

SURFACE NUMBER1 (EVENASPH)

| $A_2$ | 8.6632599E-05 |
|---|---|
| $A_3$ | -8.9690837E-07 |
| $A_4$ | 1.8125046E-09 |

SURFACE NUMBER2 (EVENASPH)

| $A_2$ | 2.6073328E-04 |
|---|---|
| $A_3$ | 1.8016267E-05 |

SURFACE NUMBER3 (EVENASPH)

| $A_2$ | -2.8893213E-04 |
|---|---|
| $A_3$ | 1.2265395E-07 |

SURFACE NUMBER4 (EVENASPH)

| $A_2$ | -1.0344567E-04 |
|---|---|

SURFACE NUMBER9 (EVENASPH)

| $A_2$ | -1.7282529E-04 |
|---|---|
| $A_3$ | -1.6460553E-06 |

SURFACE NUMBER10 (EVENASPH)

| $A_2$ | -1.1248565E-04 |
|---|---|
| $A_3$ | -2.0673481E-07 |

FIG. 7

FIG. 8

ANGLE (DEGREES)

DISTORTION ABERRATION (%)

FIG. 9

FIG. 10

AMOUNT
OF LIGHT

FIG. 11A (-40℃)

AMOUNT
OF LIGHT

FIG. 11B (25℃)

AMOUNT
OF LIGHT

FIG. 11C (85℃)

FIG. 12

EP 4 679 158 A1

FIG. 13

FIG. 14

## INTERNATIONAL SEARCH REPORT

| International application No. |
|---|
| **PCT/JP2024/006336** |

| A. | CLASSIFICATION OF SUBJECT MATTER |
|---|---|

*G02B 13/04*(2006.01)i; *G01S 7/481*(2006.01)i; *G02B 13/18*(2006.01)i
FI: G02B13/04; G01S7/481 A; G02B13/18

According to International Patent Classification (IPC) or to both national classification and IPC

| B. | FIELDS SEARCHED |
|---|---|

Minimum documentation searched (classification system followed by classification symbols)

G02B13/04; G01S7/481; G02B13/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020/189259 A1 (DENSO CORPORATION) 24 September 2020 (2020-09-24) embodiment 9, paragraphs [0031], [0151] | 1-11 |
| X | JP 2016-038574 A (NALUX CO., LTD.) 22 March 2016 (2016-03-22) examples 2, 3, paragraph [0039] | 1-11 |
| A | JP 2021-124725 A (DENSO CORPORATION) 30 August 2021 (2021-08-30) entire text, all drawings | 1-11 |
| A | US 2011/0176049 A1 (LARGAN PRECISION CO., LTD.) 21 July 2011 (2011-07-21) entire text, all drawings | 1-11 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/006336**

| Patent document cited in search report | | | Publication date (day/month/year) | Patent family member(s) | | | Publication date (day/month/year) |
|---|---|---|---|---|---|---|---|
| WO | 2020/189259 | A1 | 24 September 2020 | US 2022/0003973 A1 embodiment 9, paragraphs [0254], [0605] | | | |
| | | | | JP | 2020-154045 | A | |
| | | | | CN | 113597577 | A | |
| JP | 2016-038574 | A | 22 March 2016 | US 2016/0320688 A1 examples 2, 3, paragraph [0050] | | | |
| | | | | WO | 2016/021016 | A1 | |
| JP | 2021-124725 | A | 30 August 2021 | US 2022/0365178 A1 entire text, all drawings | | | |
| | | | | WO | 2021/153542 | A1 | |
| | | | | CN | 115039009 | A | |
| US | 2011/0176049 | A1 | 21 July 2011 | TW | 201126197 | A | |

Form PCT/ISA/210 (patent family annex) (July 2022)

**EP 4 679 158 A1**

**Patent documents cited in the description**

- WO 2019073744 A1
- JP 2021124725 A
- JP 2023036638 A